# EUROPEAN PATENT SPECIFICATION

(11) **EP 2 860 807 B1**
(45) Date of publication and mention of the grant of the patent: **14.09.2016**
(21) Application number: 14774349.6
(22) Date of filing: 26.03.2014
(51) Int. Cl.: H01M 8/241, H01M 8/04007, H01M 8/2485

(54) **FUEL CELL STACK**
BRENNSTOFFZELLENSTAPEL
EMPILEMENT DE PILES À COMBUSTIBLE

(30) Priority: 26.03.2013 JP 2013063452
(43) Date of publication of application: 15.04.2015
(73) Proprietor: Panasonic Intellectual Property Management Co., Ltd., Osaka-shi, Osaka 540-6207 (JP)
(72) Inventor: YAMAMOTO, Yoko, Osaka-shi, Osaka 540-6207 (JP); YOSHIMURA, Mitsuo, Osaka-shi, Osaka 540-6207 (JP); TAGUCHI, Yoshifumi, Osaka-shi, Osaka 540-6207 (JP)
(74) Representative: Eisenführ Speiser
(86) International application number: PCT/JP2014/001754
(87) International publication number: WO 2014/156152

(56) References cited:
- WO-A1-2013/094454
- JP-A- 2002 343 406
- JP-A- 2002 343 406
- JP-A- 2006 032 054
- JP-A- 2006 049 129
- JP-A- 2010 055 892
- JP-A- 2010 055 892

## Description

### Technical Field

The present disclosure relates to a manifold piping structure of a fuel-cell stack.

### Background Art

Fuel cells are intended to simultaneously generate electric power and heat by electrochemically reacting a hydrogen-containing fuel gas and an oxygen-containing oxidant gas such as, for example, air. For this reason, the fuel cells can be classified into a variety of kinds depending on, for example, fuels and constituent materials to be used. One of the fuel cells is a polyelectrolyte fuel cell employing a polyelectrolyte membrane.

A fuel-cell stack has supply ports and discharge ports for the fuel gas, the oxidant gas and a cooling fluid, all defined in an end surface thereof. These supply ports and discharge ports are connected to respective pipes for sending the fuel gas and the oxidant gas to single cells from outside and for flowing the cooling fluid that recovers generated heat. These pipes are integrally formed as a manifold piping structure.

A conventional manifold piping structure is known in Patent Document 1. In the manifold piping structure proposed in Patent Document 1, three pipes are integrated to enhance the sealing properties.

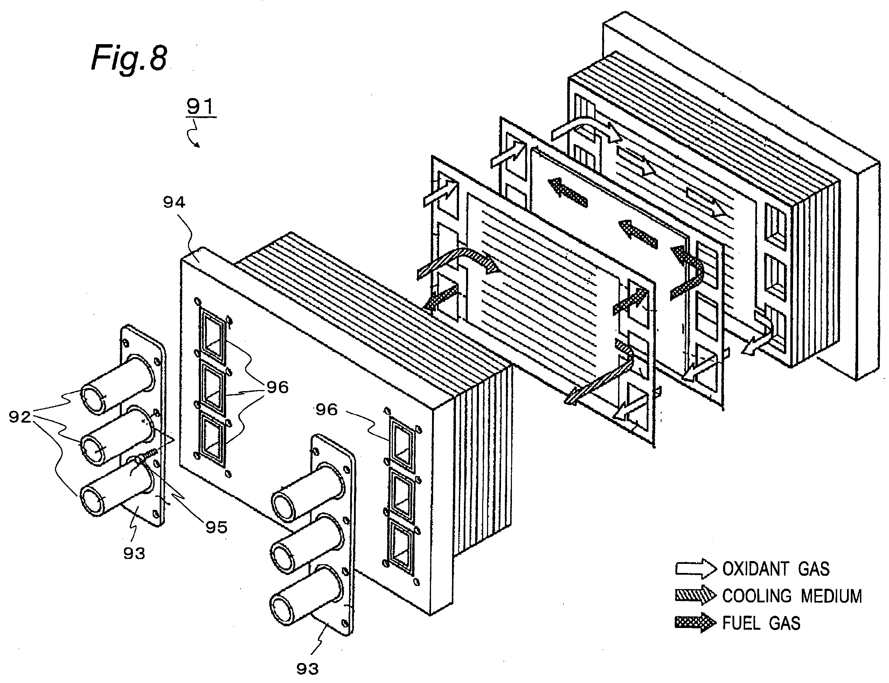

Fig. 8 is a partially exploded view of a fuel-cell stack 91 having the conventional manifold piping structure as disclosed in Patent Document 1.

In Fig. 8, the manifold piping structure is provided with a plurality of pipes 92 and a plate-like member 93 made of a resin or metal having a higher strength than the pipes 92. The pipes 92 and the plate-like member 93 are integrally molded using, for example, a resin and rigidly secured to an end plate 94 by means of bolts 95 so that the sealing properties may be ensured by reinforcing members 96 embedded in the end plate 94 and the high-strength plate-like member 93.

Document JP 2002 343406 discloses a fuel-cell stack comprising a manifold piping structure having several pipes connected by a plate-like member.

### Patent Document(s)

Patent Document 1: JP 4653978 B

### Summary of the Invention

### Problems to be solved by the Invention

However, in the conventional structure referred to above, the plate-like member is a continuous member integrated with the pipes to positively ensure the sealing properties and is not devised in terms of the thermal insulation performance for insulation between the fluids flowing through adjacent pipes.

The present disclosure has been developed to solve the above-described conventional problem and is intended to enhance the thermal insulation performance between the fluids flowing through adjacent pipes in a fuel-cell stack having a manifold piping structure that is integrated by connecting a plurality of pipes.

### Means to Solve the Problems

In accomplishing the above objective, the fuel-cell stack according to claim 1 and according to the present disclosure has the following features.

According to one aspect of the present disclosure, there is provided a fuel-cell stack including: a cell stack having a plurality of single cells stacked one on top of another and also having a first flow channel and a second flow channel, all of which extend in a direction of stack of the single cells so as to open on at least one end surface in the direction of stack; and a manifold piping structure connected to an opening of the first flow channel and an opening of the second flow channel, the manifold piping structure comprising: a first connecting pipe connected to the opening of the first flow channel via a sealing member; a second connecting pipe connected to the opening of the second flow channel via a sealing member; and a plate-like member disposed on an end surface of the cell stack to connect the first connecting pipe and the second connecting pipe, wherein the plate-like member has seal contact surfaces, with which the sealing members are respectively brought into contact, around the first connecting pipe and the second connecting pipe on a first surface thereof on a cell stack side, and the plate-like member also has a groove defined in the first surface thereof or a second surface opposite to the first surface or an opening extending through the first and second surfaces at a location between the seal contact surface around the first connecting pipe and the seal contact surface around the second connecting pipe.

### Effects of the Invention

According to the present disclosure, in the manifold piping structure that is integrated by connecting a plurality of pipes of the fuel-cell stack, the thermal insulation performance between the fluids flowing through adjacent pipes can be enhanced.

### Brief Description of the Drawings

Fig. 1 is a partially exploded perspective view of a fuel-cell stack according to a first embodiment of the present disclosure.
Fig. 2 is a developed view of a disassembled single cell in the fuel-cell stack according to the first embodiment.
Fig. 3 is a perspective view of a manifold piping structure in the fuel-cell stack according to the first embodiment as viewed from a piping side.
Fig. 4 is a perspective view of the manifold piping structure in the fuel-cell stack according to the first embodiment as viewed from a bottom surface side.
Fig. 5(a) is a top plan view of the manifold piping structure in the fuel-cell stack according to the first embodiment.
Fig. 5(b) is a cross-sectional view of the manifold piping structure in the fuel-cell stack according to the first embodiment.
Fig. 5(c) is a bottom plan view of the manifold piping structure in the fuel-cell stack according to the first embodiment.
Fig. 6 is a perspective view of the manifold piping structure of the fuel-cell stack according to the first embodiment as viewed from front, showing different openings in the manifold piping structure.
Fig. 7 is a partially exploded perspective view of a fuel-cell stack according to a second embodiment of the present disclosure.
Fig. 8 is a partially exploded view of a fuel-cell stack having a conventional manifold piping structure as disclosed in Patent Document 1.

### Embodiments for Carrying out the Invention

According to the first aspect of the present disclosure, there is provided a fuel-cell stack according to claim 1 including: a cell stack having a plurality of single cells stacked one on top of another and also having a first flow channel and a second flow channel, all of which extend in a direction of stack of the single cells so as to open on at least one end surface in the direction of stack; and a manifold piping structure connected to an opening of the first flow channel and an opening of the second flow channel, the manifold piping structure comprising: a first connecting pipe connected to the opening of the first flow channel via a sealing member; a second connecting pipe connected to the opening of the second flow channel via a sealing member; and a plate-like member disposed on an end surface of the cell stack to connect the first connecting pipe and the second connecting pipe, wherein the plate-like member has seal contact surfaces, with which the sealing members are respectively brought into contact, around the first connecting pipe and the second connecting pipe on a first surface thereof on a cell stack side, and the plate-like member also has a groove defined in the first surface thereof or a second surface opposite to the first surface or an opening extending through the first and second surfaces at a location between the seal contact surface around the first connecting pipe and the seal contact surface around the second connecting pipe.

According to the second aspect of the present disclosure, there is provided the fuel-cell stack according to the first aspect, wherein the groove defined in the first or second surface of the plate-like member extends from one edge to the other edge.

According to the third aspect of the present disclosure, there is provided the fuel-cell stack according to the first or second aspect, wherein the groove and the opening formed in the plate-like member are connected to each other.

According to the fourth aspect of the present disclosure, there is provided the fuel-cell stack according to the third aspect, wherein the opening has an elongated shape along a direction of formation of the groove.

According to the fifth aspect of the present disclosure, there is provided the fuel-cell stack according to any one of the first to fourth aspects, wherein the groove is formed in the first surface of the plate-like member on the cell stack side.

According to the sixth aspect of the present disclosure, there is provided the fuel-cell stack according to any one of the first to fifth aspects, wherein a width of an open edge of the groove is greater than a width of a bottom surface of the groove.

According to the seventh aspect of the present disclosure, there is provided the fuel-cell stack according to any one of the first to sixth aspects, wherein the manifold piping structure is formed of an insulating resin material.

Embodiments of the present disclosure are described hereinafter with reference to the drawings, but the present disclosure is not limited by the embodiments.

### (Embodiment 1)

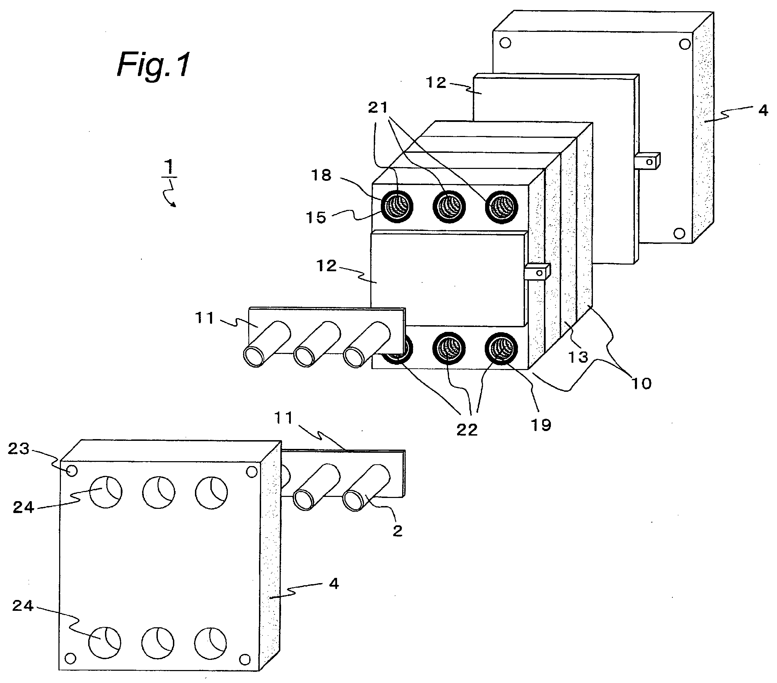

Fig. 1 is a partially exploded perspective view of a fuel-cell stack 1 according to a first embodiment of the present disclosure.

As shown in Fig. 1, the fuel-cell stack 1 includes a cell stack 10, two manifold piping structures 11 disposed on one side of the cell stack 10, two power collector plates 12 disposed on respective sides of the cell stack 10, and two end plates 4 disposed on respective sides of the cell stack 10, all of which are stacked one on top of another and fastened by bolts and nuts (not shown).

In place of the bolts and nuts, a belt or belts may be used for the fastening method. The cell stack 10 is formed by stacking two to two hundred single cells 13 one on top of another depending on a required output.

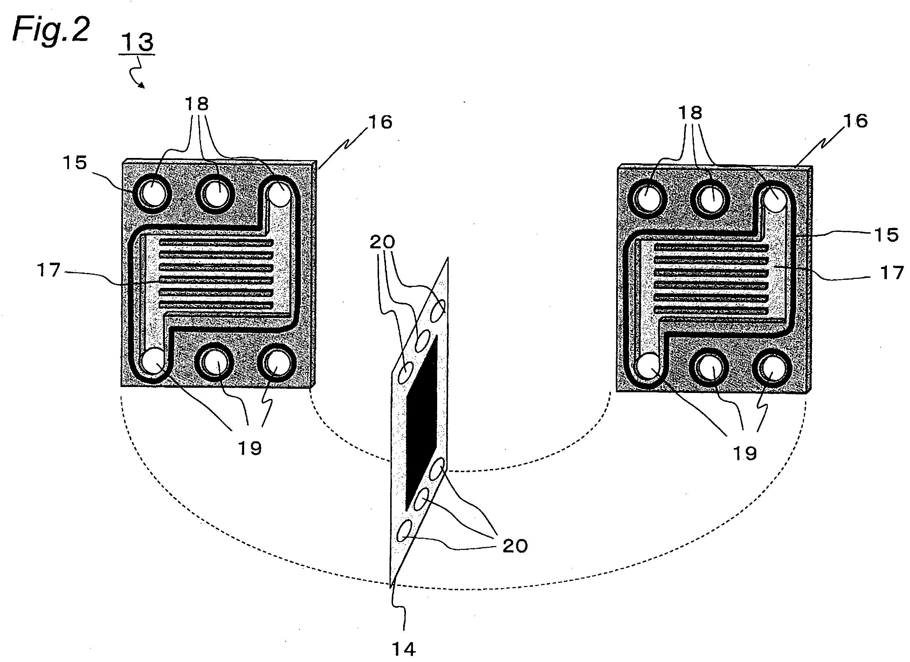

Fig. 2 is a developed view of a disassembled single cell 13.

As shown in Fig. 2, the single cell 13 is provided with an MEA (Membrane Electrode Assembly) 14 and two separators 16 each having gas seals 15. The gas seals 15 and each separator 16 may be separate members. The MEA 14 is formed by providing two catalyst layers on respective sides of a polyelectrolyte membrane and by depositing a gas diffusion layer on the outer side of each catalyst layer (not shown). The polyelectrolyte membrane is composed of a cation-exchange resin that selectively transports hydrogen ions and each catalyst layer is mainly composed of carbon powder on which a metal such as, for example, platinum having a catalytic function is supported.

Further, the gas diffusion layer has a combination of gas permeability to reaction gases (a fuel gas and an oxidant gas) and electrical conductivity to conduct electrons. The catalyst layer and the gas diffusion layer may be collectively referred to as an electrode.

Each separator 16 of the single cell 13 is located on the outer side of the MEA 14 and has flow channels 17 defined in respective surfaces thereof. The flow channel 17 formed on an inner surface of the separator 16 (on the side of the MEA 14) is a flow channel 17 to supply the catalyst layer with one of the reaction gases and the flow channel (not shown) formed on an outer surface of the separator 16 is a flow channel to flow a cooling fluid (for example, cooling water) between the single cells 13. Heat generated by the MEA 14 is recovered by the cooling water for use as thermal energy. Further, the separator 16 has electrical conductivity to electrically connect two adjacent MEAs 14 in series with each other.

The flow channel 17 of the reaction gas and the flow channel of the cooling water both formed in the separator 16 are connected at upstream ends thereof to respective supply ports 18 and at downstream ends thereof to respective discharge ports 19. Also, the MEA 14 has manifold holes 20 defined in a peripheral portion thereof (holes provided in the MEA) so as to correspond to the supply ports 18 and the discharge ports 19 of the separator 16. Accordingly, when the cell stack 10 is assembled by stacking the single cells 13, each composed of the separators 16 and the MEA 14, one on top of another, the supply ports 18 and the discharge ports 19 of each separator 16 are connected to the associated manifold holes in the MEA 14 (holes provided in the MEA) so as to communicate therewith. By doing so, a manifold of the fluids such as the reaction gases and the cooling water, i.e., a plurality of flow channels extending in a direction of stack of the single cells 13 and communicating with the fluid flow channels in each single cell is formed.

The gas seals 15 of each single cell 13 are provided on the separators 16 so as to encircle the electrodes, the supply ports 18 and the discharge ports 19. The gas seals 15 are intended to prevent the fuel gas and the oxidant gas from leaking outside or mixing together.

In the fuel-cell stack 1 shown in Fig. 1, the cell stack 10 has two reaction gas supply manifolds 21, two reaction gas discharge manifolds 22, one cooling water supply manifold 21, and one cooling water discharge manifold 22, all of which are formed therein so as to extend in the direction of stack of the single cells 13. One end of each of the two reaction gas supply manifolds 21 constitutes one of the two reaction gas supply ports 18 and one end of each of the two reaction gas discharge manifolds 22 constitutes one of the two reaction gas discharge ports 19. Also, one end of the cooling water supply manifold 21 constitutes the cooling water supply port 18 and one end of the cooling water discharge manifold 22 constitutes the cooling water discharge port 19

The two reaction gas supply ports 18 for supplying the reaction gases and the two reaction gas discharge ports 19 for discharging the reaction gases are formed in an end surface (an outer surface of the separator 16 of the outermost single cell 13) of the cell stack 10.

Further, the cooling water supply port 18 for supplying the cooling water and the cooling water discharge port 19 for discharging the cooling water are formed. The reaction gases and the cooling water that have respectively entered the reaction gas supply ports 18 and the cooling water supply port 18 flow through each single cell 13 and between adjacent single cells 13 and are respectively discharged from the reaction gas discharge ports 19 and the cooling water discharge port 19. In this first embodiment, the supply ports 18 and the discharge ports 19 that are open on the end surface of the cell stack 10 are an example of openings of first flow channels and a second flow channel.

Also, the two power collector plates 12 for maintaining good electrical contact of the cell stack 10 with an external circuit are provided on respective outer surfaces of the cell stack 10 and between the cell stack 10 and respective end plates 4. Each of the power collector plates 12 is held within an associated one of the end plates 4 so as not to overlap with the reaction gas supply ports 18, the reaction gas discharge ports 19, the cooling water supply port 18 and the cooling water discharge port 19, all formed in the cell stack 10.

Further, in order to sandwich and fasten the cell stack 10 and the power collector plates 12 from opposite sides using the bolts (not shown) employed as the fastening means, the end plates 4 are located on the outer sides of the power collector plates 12. The end plates 4 are made of, for example, an insulating resin. The bolts extend through respective bolt holes formed in the end plates 4 and the nuts (not shown) are screwed onto them to fasten the entire fuel-cell stack 1. For this purpose, the end plates 4 require a high rigidity and must have a certain thickness to firmly and uniformly sandwich the entire fuel-cell stack 1 from opposite sides.

Although in the above description the end plates 4 have been explained as being each formed of a single member of a resin, the present disclosure is not limited to such a case. By way of example, each of the end plates 4 may be composed of a plate of insulation (insulating plate) disposed on the side of the power collector plate 12 and a strength-retaining plate (end plate) made of, for example, a metal and disposed on the outer side thereof or may have a laminated structure such as, for example, a double-layered structure in which those plate member are integrated.

Also, the end plate 4 to be connected to external pipes has a plurality of through-holes 24 each in the form of, for example, a circular hole at locations corresponding to the reaction gas supply ports 18, the cooling water supply port 18, the reaction gas discharge ports 19, and the cooling water discharge port 19, all formed in the cell stack 10.

A plurality of pipes 2 connected to the manifold piping structures 11 are inserted into respective through-holes 24 from the side of the cell stack 10 so that the reaction gas supply ports 18, the cooling water supply port 18, the reaction gas discharge ports 19 and the cooling water discharge port 19, all formed in the cell stack 10, may be connected to respective external pipes through the manifold piping structures 11. The gas seals 15 are respectively provided around the reaction gas supply ports 18, the cooling water supply port 18, the reaction gas discharge ports 19 and the cooling water discharge port 19 in the cell stack 10. The gas seals 15 are compressed by the manifold piping structures 11 to seal connecting portions of the manifold piping structures 11 with the supply ports 18 and the discharge ports 19.

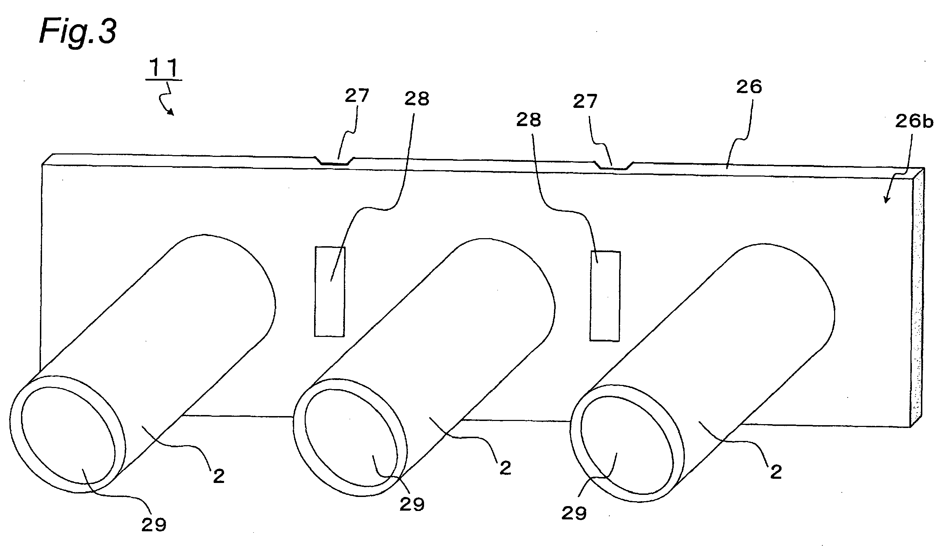

A construction of each manifold piping structure 11 is explained in detail with reference to Fig. 3, Fig. 4 and Fig. 5.

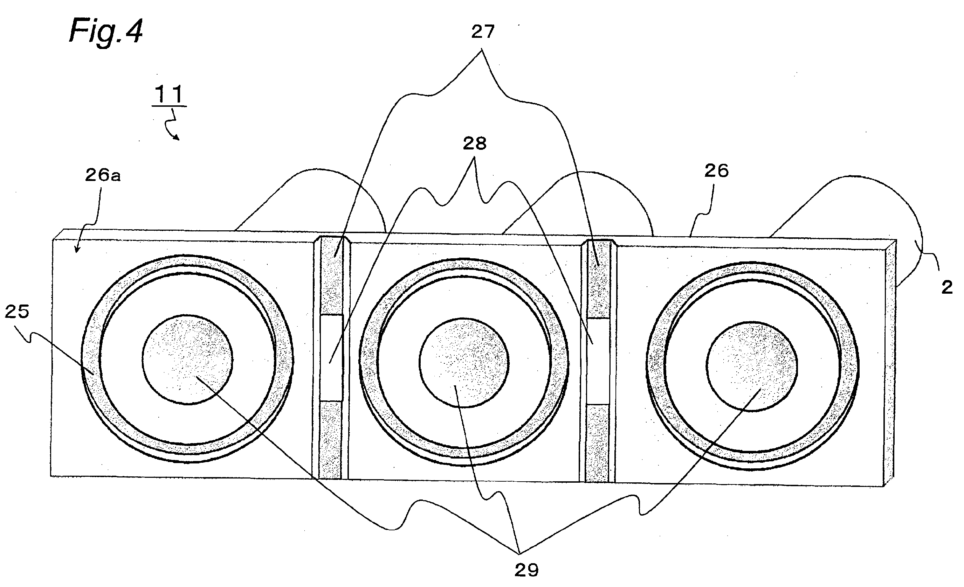

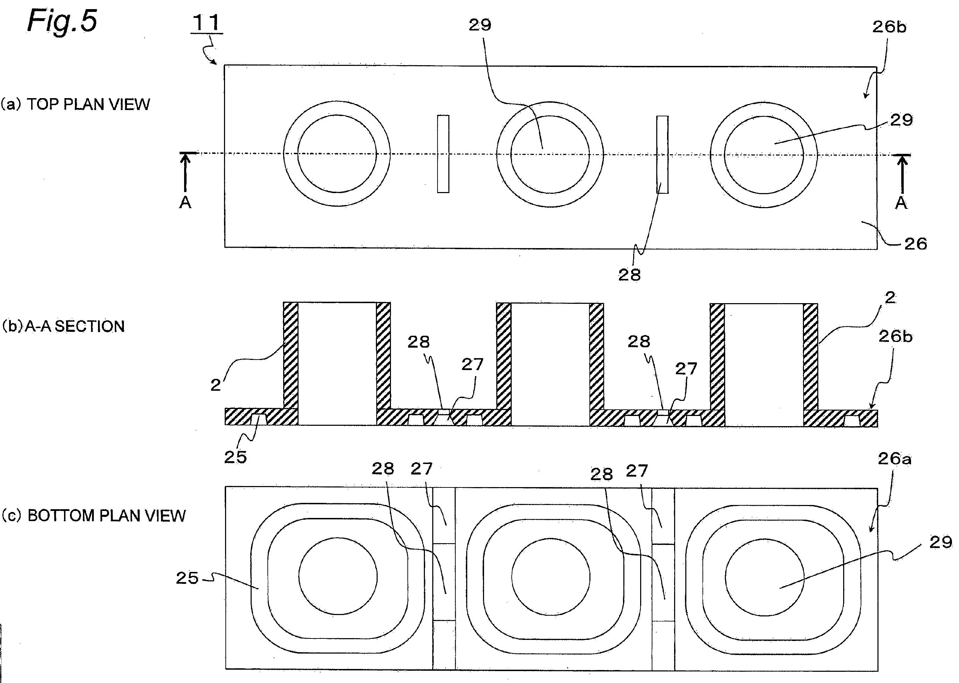

Fig. 3 is a perspective view of the manifold piping structure 11 as viewed from the front side. Fig. 4 is a perspective view of the manifold piping structure 11 as viewed from the bottom side (from the side of seal contact surfaces 25). Figs. 5(a), 5(b) and 5(c) are a top plan view (front view), a cross-sectional view and a bottom plan view (rear view) of the manifold piping structure 11, respectively.

As shown in Fig. 3 to Fig. 5, the manifold piping structure 11 according to the first embodiment is provided with a plurality of pipes (short pipes) 2 that constitute first connecting pipes and a second connecting pipe connectable to external fluid pipes of the fuel-cell stack 1 and with a plate-like member or flange 26 for integrally connecting the plurality of pipes 2 together. The pipes 2 are three pipes for the reaction gases and the cooling water and each joined at one end thereof to the flange 26. The manifold piping structure 11 is integrally formed by injection molding using, for example, a resin. In Fig. 3 to Fig. 5, the pipes 2 have been illustrated as being formed into the same size and the same shape, the present disclosure is not limited to such a case. By way of example, any of the pipes 2 may be modified so as to have an increased inner diameter depending on the nature or amount of a fluid passing therethrough.

As shown in Fig. 4, Fig. 5(b) and Fig. 5(c), the flange 26 of the manifold piping structure 11 has manifold holes 29 (that is, holes in the pipes 2) defined therein so as to correspond to the pipes 2 and open on a bottom surface or a first surface 26a (a surface on the side of the cell stack 10) of the flange 26. In the first surface 26a of the flange 26 around the manifold holes 29, seal contact surfaces (grooves) 25 are provided so as to encircle respective manifold holes 29. When the first surface 26a of the flange 26 of the manifold piping structure 11 is positioned on one end surface of the cell stack 10, the gas seals 15 provided on the end surface of the cell stack 10 around the supply ports 18 or the discharge ports 19 are brought into contact with the groove-like seal contact surfaces 25, respectively, thereby sealing the connecting portions of the pipes 2 with the supply ports 18 or the discharge ports 19.

Also, as shown in Fig. 3 to Fig. 5, in the first surface 26a of the flange 26, a groove is formed between the holes in two adjacent pipes 2, i.e., between two manifold holes 29 so as to extend in a direction perpendicular to a direction of array of the pipes 2. This groove is formed continuously from one edge to the other edge of the flange 26 so as to divide between an area peripheral to one of the two adjacent pipes 2 and another area peripheral to the other of the two adjacent pipes 2 on the first surface 26a of the flange 26 (to divide the first surface 26a so that the first surface 26a may not be continuous). For this reason, in the first embodiment, this groove is referred to as a dividing portion 27. Each dividing portion 27 is formed between the seal contact surfaces 25 around the two adjacent pipes 2. Each groove-like dividing portion 27 according to the first embodiment is open on opposite edges of the flange 26.

An opening 28 is formed in an inner bottom surface of each dividing portion (groove) 27 so as to extend through the flange 26 in a thickness direction from the first surface 26a side toward the second surface 26b side (rear surface side of the first surface 26a). This opening 28 is continuous with the dividing portion 27 or communicates with an inner space of the groove in the dividing portion 27 to constitute a portion of the dividing portion 27. Also, the opening 28 is in the form of an elongated hole along the direction in which the dividing portion 27 extends and is formed near the center in such a direction. As shown in Fig. 5(b), the dividing portion 27 has a trapezoidal cross-sectional shape, in which an upper open end of the groove has a width greater than that of a lower surface.

As just described, in the first surface 26a of the flange 26 of the manifold piping structure 11, a groove-like dividing portion 27 is provided between two adjacent pipes 2, thereby making it possible to divide between an area peripheral to one of the two adjacent pipes 2 and another area peripheral to the other of the two adjacent pipes 2. Heat transfer between a fluid flowing through one of the two adjacent pipes 2 and another fluid flowing through the other of the two adjacent pipes 2 can be suppressed in the vicinity of the first surface 26a, thus making it possible to enhance the heat insulating properties between the fluids. Such heat transfer suppression between the fluids is realized by the presence of the dividing portion 27 that makes the first surface 26a not continuous and by reducing the cross-sectional area of the flange 26 in a heat transfer direction at a location of the dividing portion 27.

Also, the opening 28 formed between the two adjacent pipes 2 so as to extend through the flange 26 in the thickness direction can further suppress the heat transfer between the pipes 2. In particular, the opening 28 is also open on the second surface 26b side of the flange 26, thereby making it possible to suppress the heat transfer in the vicinity of the second surface 26b of the flange 26. Accordingly, by providing the openings 28 in the flange 26 of the manifold piping structure 11 in addition to the dividing portions 27, the heat transfer from any one of the pipes 2 to the other pipes 2 can be further suppressed to thereby enhance a heat insulating effect.

Further, the dividing portions 27 provided in the flange 26 can enhance the flatness of the seal contact surfaces 25. Because the first surface 26a of the flange 26 is divided into three flat regions by the groove-like dividing portions 27, the area of each flat region is reduced compared with the total area of the flange 26. For this reason, the flatness of each flat region can be enhanced compared with a case where the entire flange 26 is a single flat region. Also, in applications where the flange 26 is formed by injection molding, each groove-like dividing portion 27 can reduce the influence of one of two adjacent flat regions on the other, thus making it possible to enhance the flatness. Further, in mounting the manifold piping structure 11 on the cell stack 10, the flange 26 can be easily transformed at the dividing portions 27 and, hence, the flatness of the seal contact surfaces 25 during assembling can be easily ensured. Accordingly, the sealing properties between the manifold piping structure 11 and the cell stack 10 are enhanced.

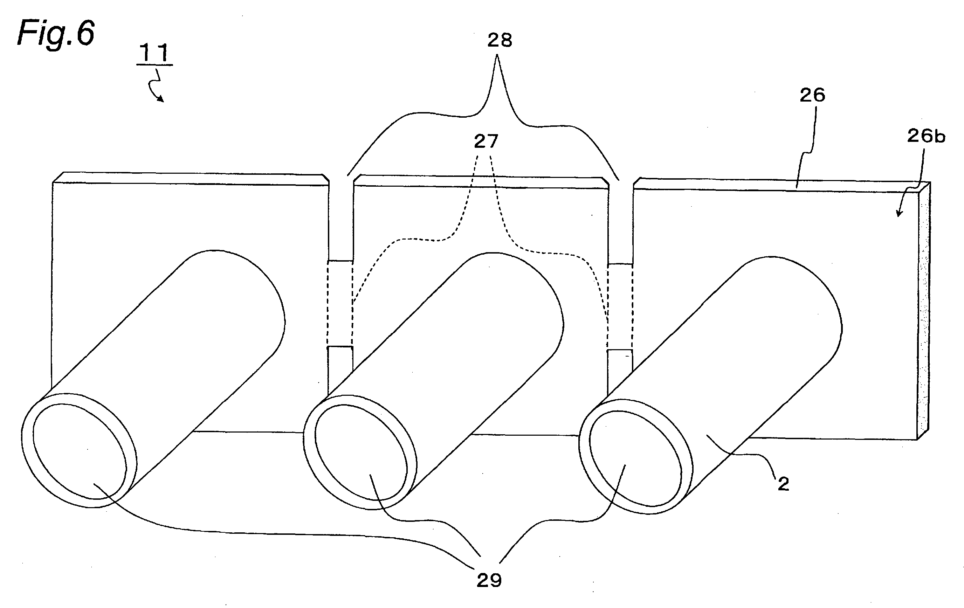

Fig. 6 is a perspective view of the manifold piping structure 11 as viewed from front, showing different openings that extend through the flange 26 in the thickness direction. As shown in Fig. 6, each opening 28 is not provided at the center of the flange 26, but two sets of two aligned openings 28 are provided at opposite edges of the flange 26. If the groove-like dividing portions 27 are formed so as to render an area between two adjacent pipes 2 to be discontinuous on the first surface 26a side (on the side of the seal contact surfaces 25) of the flange 26, the openings 28 may be provided at the opposite edges and not in the vicinity of the center of the flange 26, as described above. However, as shown in Fig. 3 to Fig. 5, the effect of suppressing heat transfer can be further enhanced by providing openings 28 each dividing the shortest route between two adjacent pipes 2.

### (Embodiment 2)

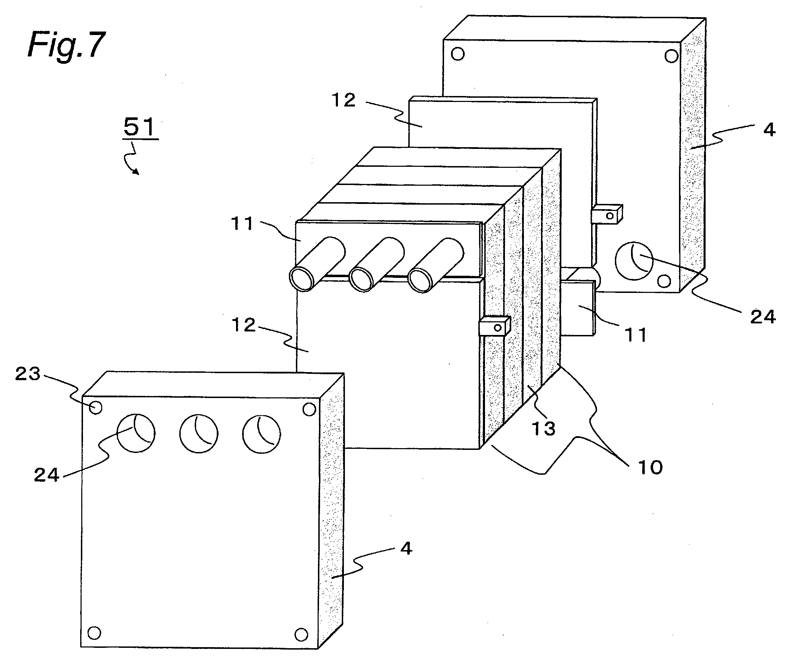

A fuel-cell stack 51 according to a second embodiment of the present disclosure is explained hereinafter with reference to Fig. 7. The same component parts as those of the fuel-stack 1 according to the first embodiment are designated by the same signs and explanation thereof is omitted.

Fig. 7 is a partially exploded perspective view of the fuel-cell stack 51 according to the second embodiment of the present disclosure. The fuel-cell stack 51 includes a cell stack 10, two power collector plates 12 disposed on respective sides of the cell stack 10, two manifold piping structures 11 disposed on respective sides of the cell stack 10, and two end plates 4 disposed on respective sides of the cell stack 10, all of which are stacked one on top of another and fastened by bolts and nuts (not shown).

The fuel-cell stack 51 according to the second embodiment has two reaction gas supply ports for supplying respective reaction gases and a cooling water supply port for supplying cooling water, all of which are formed in one (the near side in the figure) of opposite end surfaces (outer surfaces of the separators 16 of the outermost single cells 13) of the cell stack 10.

Also, two reaction gas discharge ports for discharging respective reaction gases and a cooling water discharge port for discharging the cooling water are formed in the other (the rear side in the figure) of the opposite end surfaces (outer surfaces of the separators 16 of the outermost single cells 13) of the cell stack 10.

The reaction gases and the cooling water that have respectively entered the reaction gas supply ports and the cooling water supply port flow through each single cell and between adjacent single cells and are respectively discharged from the reaction gas discharge ports and the cooling water discharge port, all located on the opposite side (the rear side in the figure) of the cell stack 10.

Also, the two power collector plates 12 for maintaining good electrical contact of the cell stack 10 with an external circuit are provided on respective outer surfaces of the cell stack 10 and between the cell stack 10 and respective end plates 4. Each of the power collector plates 12 is held within an associated one of the end plates 4 so as not to overlap with the reaction gas supply ports and the cooling water supply port or the reaction gas discharge ports and the cooling water discharge port, all formed in the cell stack 10.

Also, each end plate 4 has a plurality of through-holes 24 each in the form of, for example, a circular hole at locations corresponding to the reaction gas supply ports and the cooling water supply port or the reaction gas discharge ports and the cooling water discharge port, all formed in the cell stack 10.

The manifold piping structures 11 are inserted into the through-holes 24 from the side of the cell stack 10 so that the reaction gas supply ports 18, the cooling water supply port 18, the reaction gas discharge ports 19 and the cooling water discharge port 19, all formed in the cell stack 10, may be connected to respective external pipes through the manifold piping structures 11. Gas seals 15 are respectively provided around the reaction gas supply ports 18, the cooling water supply port 18, the reaction gas discharge ports 19 and the cooling water discharge port 19 in the cell stack 10. The gas seals 15 are compressed by the manifold piping structures 11 for sealing.

In the fuel-cell stack 51 according to the second embodiment, the manifold piping structures 11 are disposed on respective sides of the cell stack 10, thereby making it possible to form the power collector plates 12 and the end plates 4, both located on opposite sides, into the same shape, respectively, and to reduce the number of component parts.

Although in the above-described embodiments the groove-like dividing portions 27 formed in the flange 26 of each manifold piping structure 11 have been explained as extending in a direction perpendicular to a direction of array of the pipes 2, the present is not limited to such a case. It is sufficient if the dividing portions 27 extend in a direction intersecting with the direction of array of the pipes 2 and, hence, the dividing portions 27 may extend in a direction oblique to the direction perpendicular to the direction of array.

Although each opening 28 has been described as being formed in the inner bottom surface of the dividing portion 27, the dividing portion 27 and the opening 28 may be formed at different positions so as not to be continuous with each other. Also, even if only the groove-like dividing portions 27 are provided and no openings 28 are provided, the effect of suppressing heat transfer can be obtained by the dividing portions 27. Similarly, even if only the openings 28 are provided and no groove-like dividing portions 27 are provided, the effect of suppressing heat transfer can be obtained by the openings 28. In the case where only the openings 28 are provided, it is preferred that the openings 28 be each in the form of an elongated opening that extends in a direction intersecting with the direction of array of the pipes 2.

Also, the dividing portions 27 have been described as being provided on the side of the first surface 26a of the flange 26, but they may be provided on the side of the second surface 26b. In the second surface 26a of the flange 26 of each manifold piping structure 11, by providing a groove-like dividing portion 27 between two adjacent pipes 2, an area peripheral to one of the two adjacent pipes 2 and another area peripheral to the other of the two adjacent pipes 2 can be divided, thereby making it possible to suppress heat transfer. That is, if each groove-like dividing portion 27 is formed in the first surface 26a or the second surface 26b of the flange 26 between the seal contact surface 25 around one of the two adjacent pipes 2 and the seal contact surface 25 around the other of the two adjacent pipes 2, the effect of suppressing heat transfer can be obtained.

Further, the seal contact surfaces 25 disposed so as to encircle the pipes 2 on the first surface 26a of the flange 26 are not limited to a grooved shape. It is sufficient if the seal contact surfaces are surfaces in contact with the gas seals 15, the seal contact surfaces may be a non-grooved planar contact region.

In addition, although each dividing portion 27 has been described as having a trapezoidal cross-sectional shape, any one of various cross-sectional shapes may be employed. By way of example, if the dividing portion 27 has a cross-sectional shape in which the width of an open edge of a groove is greater than that of a bottom surface, the flange 26 can be easily demolded in forming the flange 26 by injection molding. Also, stress concentration can be avoided by shaping the grooved dividing portion 27 not to have edged inner surfaces (for example, to have curved inner surfaces).

Also, although end surfaces of the cell stack 10 have been described as being those of the outermost single cells 13 of the stacked single cells 13, the cell stack 10 may be defined as including the single cells 13 and the end plates 4 and, in this case, the end surfaces of the cell stack 10 are those of the end plates 4. In this configuration, the flanges 26 of the manifold piping structures 11 may be disposed on one or both of the end surfaces of the end plates 4.

### Industrial Applicability

The fuel-cell stack according to the present disclosure can not only enhance the assembling workability and the sealing properties using the manifold piping structures, but provide a piping structure having a high heat insulating effect as well. Accordingly, this fuel-cell stack is thought to be preferably applied to a home cogeneration system or an automotive fuel battery.

### Explanation of Reference Numerals

- 1: fuel-cell stack
- 2: pipe
- 3: plate-like member
- 4: end plate
- 5: bolt
- 6: reinforcing member
- 10: cell stack
- 11: manifold piping structure
- 12: power collector plate
- 13: single cell
- 14: MEA (Membrane Electrode Assembly)
- 15: gas seal
- 16: separator
- 17: flow channel
- 18: supply port
- 19: discharge port
- 20: manifold hole (hole defined in MEA)
- 21: supply manifold
- 22: discharge manifold
- 23: bolt hole
- 24: through-hole
- 25: seal contact surface
- 26: flange
- 27: dividing portion (groove)
- 28: opening
- 29: manifold hole (hole defined in a pipe)

## Claims

1. A fuel-cell stack comprising:
a cell stack (10) having a plurality of single cells (13) stacked one on top of another and also having a first flow channel and a second flow channel, all of which extend in a direction of stack of the single cells so as to open on at least one end surface in the direction of stack; and
a manifold piping structure (11) connected to an opening of the first flow channel and an opening of the second flow channel, the manifold piping structure comprising:
a first connecting pipe (2) connected to the opening of the first flow channel via a sealing member (15);
a second connecting pipe (2) connected to the opening of the second flow channel via a sealing member (15); and
a plate-like member (26) disposed on an end surface of the cell stack to connect the first connecting pipe and the second connecting pipe, **characterized in that**
the plate-like member has seal contact surfaces (25), with which the sealing members are respectively brought into contact, around the first connecting pipe and the second connecting pipe on a first surface (26a) thereof on a cell stack side, and
the plate-like member also has a groove (27) defined in the first surface thereof or a second surface (26b) opposite to the first surface and an opening (28) extending through the first and second surfaces, the groove and the opening being located between the seal contact surface around the first connecting pipe and the seal contact surface around the second connecting pipe, and the groove and the opening being connected to each other.

2. The fuel-cell stack according to claim 1, wherein the groove defined in the first or second surface of the plate-like member extends from one edge to the other edge opposite to the one edge of the plate-like member.

3. The fuel-cell stack according to claim 1 or 2, wherein the opening has an elongated shape along a direction of formation of the groove.

4. The fuel-cell stack according to any one of claims 1 to 3, wherein the groove is formed in the first surface of the plate-like member on the cell stack side.

5. The fuel-cell stack according to any one of claims 1 to 4, wherein a width of an open edge of the groove is greater than a width of a bottom surface of the groove.

6. The fuel-cell stack according to any one of claims 1 to 5, wherein the manifold piping structure is formed of an insulating resin material.

## Patentansprüche

1. Brennstoffzellenstapel, der aufweist:
einen Zellenstapel (10) mit einer Vielzahl von Einzelzellen (13), die aufeinander gestapelt sind, und weiter mit einem ersten Strömungskanal und einem zweiten Strömungskanal, die sich alle in eine Stapelrichtung der Einzelzellen erstrecken, um sich an wenigstens einer Endoberfläche in Stapelrichtung zu öffnen, und
eine Verteilerleitungsstruktur (11), die mit einer Öffnung des ersten Strömungskanals und einer Öffnung des zweiten Strömungskanals verbunden ist, wobei die Verteilerleitungsstruktur aufweist:
eine erste Verbindungsleitung (2), die mit der Öffnung des ersten Strömungskanals mittels eines Dichtungselements (15) verbunden ist,
eine zweite Verbindungsleitung (2), die mit der Öffnung des zweiten Strömungskanals mittels eines Dichtungselements (15) verbunden ist, und
ein plattenähnliches Element (26), das an einer Endoberfläche des Zellstapels angeordnet ist, um die erste Verbindungsleitung und die zweite Verbindungsleitung zu verbinden, **dadurch gekennzeichnet, dass**
das plattenähnliche Element Dichtungskontaktoberflächen (25), mit denen die Dichtungselemente jeweils in Kontakt gebracht sind, auf dessen erster Oberfläche (26a) auf einer Zellstapelseite um die erste Verbindungsleitung und die zweite Verbindungsleitung aufweist, und
das plattenähnliche Element weiter eine Rinne (27), die in dessen erster Oberfläche oder einer zweiten Oberfläche (26b) gegenüber der ersten Oberfläche definiert ist, und eine Öffnung (28) aufweist, die sich durch die ersten und zweiten Oberflächen erstreckt, wobei die Rinne und die Öffnung zwischen der Dichtungskontaktoberfläche um die erste Verbindungsleitung und der Dichtungskontaktoberfläche um die zweite Verbindungleitung angeordnet sind und die Rinne und die Öffnung miteinander verbunden sind.

2. Brennstoffzellenstapel nach Anspruch 1, wobei sich die Rinne, die in der ersten oder zweiten Oberfläche des plattenähnlichen Elements definiert ist, von einer Kante zu der anderen Kante gegenüber der einen Kante des plattenähnlichen Elements erstreckt.

3. Brennstoffzellenstapel nach Anspruch 1 oder 2, wobei die Öffnung eine längliche Form entlang einer Ausbildungsrichtung der Rinne hat.

4. Brennstoffzellenstapel nach einem der Ansprüche 1 bis 3, wobei die Rinne in der ersten Oberfläche des plattenähnlichen Elements auf der Zellenstapelseite gebildet ist.

5. Brennstoffzellenstapel nach einem der Ansprüche 1 bis 4, wobei eine Breite einer offenen Kante der Rinne größer ist als eine Breite einer Bodenoberfläche der Rinne.

6. Brennstoffzellenstapel nach einem der Ansprüche 1 bis 5, wobei die Verteilerleitungsstruktur aus einem isolierenden Harzmaterial gebildet ist.

## Revendications

1. Empilement de piles à combustible comprenant:
un empilement de piles (10) ayant une pluralité de piles individuelles (13) empilées les unes sur les autres et ayant également un premier canal d'écoulement et un deuxième canal d'écoulement qui s'étendent tous dans une direction d'empilement des piles individuelles de façon à s'ouvrir sur au moins une surface d'extrémité dans la direction d'empilement, et
une structure de conduites de distribution (11) qui est reliée à une ouverture du premier canal d'écoulement et à une ouverture du deuxième canal d'écoulement, ladite structure de conduites de distribution comprenant:
une première conduite de raccordement (2) qui est reliée à l'ouverture du premier canal d'écoulement par l'intermédiaire d'un élément d'étanchéité (15),
une deuxième conduite de raccordement (2) qui est reliée à l'ouverture du deuxième canal d'écoulement par l'intermédiaire d'un élément d'étanchéité (15), et
un élément de type plaque (26) qui est disposé sur une surface d'extrémité de l'empilement de piles pour relier la première conduite de raccordement et la deuxième conduite de raccordement, **caractérisé par le fait que**
ledit élément de type plaque présente des surfaces de contact d'étanchéité (25), avec lesquelles les éléments d'étanchéité sont respectivement mis en contact, sur une première surface (26a) de celui-ci, sur un côté de l'empilement de piles, autour de la première conduite de raccordement et la deuxième conduite de raccordement, et
ledit élément de type plaque présente également une rainure (27) définie dans la première surface de celui-ci ou une deuxième surface (26b) opposée à la première surface, et une ouverture (28) s'étendant à travers les première et deuxième surfaces, ladite rainure et ladite ouverture étant disposées entre la surface de contact d'étanchéité autour de la première conduite de raccordement et la surface de contact d'étanchéité autour de la deuxième conduite de raccordement, et la rainure et l'ouverture étant reliées entre elles.

2. Empilement de piles à combustible selon la revendication 1, dans lequel la rainure définie dans la première ou la deuxième surface de l'élément de type plaque s'étend d'un bord à l'autre bord opposé audit un bord de l'élément de type plaque.

3. Empilement de piles à combustible selon la revendication 1 ou 2, dans lequel l'ouverture présente une forme allongée le long d'une direction de formation de la rainure.

4. Empilement de piles à combustible selon l'une quelconque des revendications 1 à 3, dans lequel la rainure est formée dans la première surface de l'élément de type plaque sur le côté d'empilement de piles.

5. Empilement de piles à combustible selon l'une quelconque des revendications 1 à 4, dans lequel une largeur d'un bord ouvert de la rainure est supérieure à une largeur d'une surface de fond de la rainure.

6. Empilement de piles à combustible selon l'une quelconque des revendications 1 à 5, dans lequel la structure de conduites de distribution est réalisée à partir d'une matière de résine isolante.
